Europäisches Patentamt

European Patent Office

Office européen des brevets

Publication number: **0 286 340**
**A2**

# EUROPEAN PATENT APPLICATION

Application number: 88302985.2

Int. Cl.⁴ **H02G 15/18 , H02G 15/013 , B29C 61/10**

Date of filing: 05.04.88

Priority: 06.04.87 GB 8708135

Date of publication of application:
12.10.88 Bulletin 88/41

Designated Contracting States:
AT BE CH DE ES FR GB IT LI NL SE

Applicant: **N.V. RAYCHEM S.A.**
**Diestsesteenweg 692**
**B-3200 Kessel-lo(BE)**

Inventor: **Nolf, Jean-Marie Etienne**
**89, Bierbeekstraat**
**B-3040 Leuven(BE)**
Inventor: **Vansant, Jan Lodewijk M.F.G.**
**Minneveld 2**
**B-3040 Leuven(BE)**

Representative: **Hall, Robert Leonard et al**
**Raychem Limited Intellectual Property Law**
**Department Swan House 37-39 High Holborn**
**London WC1(GB)**

Sealing device.

A sealing device for sealing for example an annular space between a duct and a cable it carries comprises a tape that can be wrapped around the cable and that can be electrically shrunk widthways to cause its thickness to increase.

Fig.1.

## SEALING DEVICE

This invention relates to sealing, and especially to sealing a space between an elongate object and a surface adjacent the elongate object.

It is often necessary to enclose part of an elongate object to protect that part of the object from the environment, for example where it is necessary to protect a joint in an electric cable or other equipment and for protection of service lines such as oil pipes. In such cases it is necessary to provide a reliable seal between an outer cover (such as a splice case) and the enclosed object (such as a cable jacket) and also between any different parts of the cover that are joined together. Another important type of seal is a duct seal, where a seal is needed between a cable, for example, and a wall or bulkhead duct through which it passes.

The reason that a seal (rather than an adhesive bond of no significant thickness) is required in these instances is due to a disparity in size or shape between the outer surface and the elongate object or objects. For example, a duct may be several millimetres greater in diameter than the cable it carries, or the installed size of a cover may be larger than a cable it is desired to seal. Also, when a branch-out between two or more objects is to be sealed it will generally be necessary to convert the concave surface at the crutch region to a convex or straight surface at the crutch region to a convex or straight surface that can be enclosed by, say, half shells or a recoverable sleeve.

Such seals have usually been formed by the use of a conformable sealing member for example an O-ring or the use of a sealant or a hot-melt adhesive. Whilst these seals in general work in a satisfactory manner, problems sometimes occur. For example, by their nature, conformable sealing members have a low modulus and, especially where they are used to fill large voids, may have a tendency to creep over a long period of time. Also in some circumstances leak paths may occur if it has not been possible to introduce sufficient heat into a hot-melt adhesive seal to melt the adhesive. The leak paths may permit, for example, ingress of moisture, or in the case of a pressurised cable, egress of the pressurising fluid.

Duct seals involving more parts such as a triggered biasing spring acting outwards on a sealing member are also know, as described for example in Published Patent Application No. 0179657 (B108).

We have devised a new sealing device in the form of a tape which can be wrapped in a space to be sealed, and which changes its shape and or size on heating to fill the space to be sealed. The new sealing tape comprises a heat-recoverable member or members to effect said change in shape and or size.

A heat-recoverable article is generally an article that recovers on heating towards an original shape from which it has previously been deformed, but the term "heat-recoverable", as used herein, also includes an article which, on heating, adopts a new configuration, even if it has not previously deformed.

In their most common form, such an article comprises a heat-shrinkable sleeve made from a polymeric material exhibiting the property of elastic or plastic memory as described, for example, in U.S. Patent 2,027,962, 3,086,242 and 3,795,372. As is made clear in, for example, U.S. Patent 2,207,962, the original dimensionally heat-stable form may be a transient form in a continuous process in which, for example, an extruded tube is expanded, whilst hot, to a dimensionally heat-unstable form but, in other applications, a preformed dimensionally heat-stable form in a separate stage.

In the production of heat-recoverable articles, the polymeric material may be cross-linked at any stage in the production of the article that will enhance the desired dimensional-recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state of the article is heat-unstable, application of heat will cause the article to assume its original heat-stable shape.

In other articles, as described, for example, in British Patent 1,440,524, an elastomeric member such as an outer tubular member is held in a stretched state by a second member, such as an inner tubular member, which, upon heating weakens and thus allows the elastomeric member to recover.

The present invention provides a heat-recoverable sealing tape being capable of being wrapped around a substrate and having means for locating sealing material (preferably adhesive), the tape being so configured as to cause displacement of sealing material on heat-recovery of the tape.

The sealing material may be supplied separately of the tape for example as a separate tape wrap, but is preferably fixed to the tape.

The sealing tape preferably comprises one or more heat-recoverable members extending substantially in a plane of the tape in a direction at an angle to the length of the tape. wherein the sealing tape can be wrapped at least partly around at least one elongate object such that recovery of the heat-recoverable member(s) causes the tape to decrease in width and increase in thickness to form a seal between the or each object and a surface surrounding the or each object.

The present invention also provides a method of forming a seal between at least one elongate object and a surface surrounding the or each object comprising (1) wrapping at least partly around the object(s) a sealing tape having one or more heat-recoverable members extending substantially in a plane of the tape in a direction at an angle to the length of the tape; and (2) recoverng the heat-recoverable member(s) thereby causing the tape to decrease in width and increase in thickness to form the seal between the said elongate object(s) and the said surface.

For the avoidance of doubt the width of the tape is that distance measured along the major surface of the tape. and the thickness is the distance between the two major surfaces. Thus the width is always greater than the thickness, at least before recovery. Reference to a "plane" of the tape does not imply that the tape is flat.

The sealing tape according to the invention. preferably also comprises an electrically-powerable heater which can be powered to heat and to recover the recoverable members.

The heat-recoverable members preferably extend in a direction at an angle less than 10°C to the line perpendicular to the length of the tape and. preferably extend, themselves, perpendicular to the length of the tape.

The tape preferably has a width to thickness ratio of at least 5:1, preferably in the range 10:1 to 50:1, more preferably about 15:1, before recovery of the recoverable members. The thickening of the tape on unrestricted recovery is preferably at least $2^x$. more preferably at least $3^x$.

The tape is preferably flexible. Preferably such that it can be bent double by hand.

The sealing tape is preferably provided by an envelope (optionally closed) of material. and when a heater is used, the envelope preferably contains the heater. The envelope is preferably flattened (ie. has small internal volume) to provide a tape-like shape and may be provided for example by two flat strip sheets of material joined along one or both of their two longitudinal edges. or by a single strip sheet folded along its longitudinal axis and optionally joined along the single longitudinal edge. Joining may be effected, for example. by stitching, welding, gluding or stapling. As another example the envelope may be provided by substantially flattening a tube.

The tape, for example the envelope, may comprise any suitable material. In one preferred embodiment the envelope comprises a heat-stable (i.e. non heat-recoverable) polymeric material. In another preferred embodiment the envelope comprises a heat-recoverable material. for example a fabric comprising heat-recoverale fibres which fibres also provide the said heat-recoverable member(s) according to the invention.

Heat-recoverable articles which are based on fabrics are described in the following patent publications and copending applications: US 3669157 (Carolina Narrow Fabric), European Patent Application Publication Nos. 0116393, 0116391, 0117026, 0115905, 0116392, 0116390, 0117025, 0118260, 0137648, 0153823, 0175554, 0202898, and 0225152. The disclosure of these applications are incorporated herein by reference. The manufacture of heat recoverable article from fabrics containing heat recoverable fibres has a number of advantages as compared with conventional heat-shrinkable products including ease of manufacture, since no subsequent expansion step is necessary.

The heat recoverable fabrics described in the prior art have many applications. for example covering, mechanically protecting, electrically screening, and environmentally sealing objects enclosed by the fabric. For many of those applications it is particularly desirable for the fabric to provide an enclosure which is impervious to the ingress of water, moisture or other liquid. and for these applications, imperviousness is typically achieved by using a polymeric material applied as a laminate layer on one or both sides of the fabric, or as a matrix through which the fibre extends. The use of such a polymeric laminate or matrix may not be preferred in the present invention, where imperviousness is not a requirement.

A first category of a preferred embodiment of invention in which the tape is provided by a heat-recoverable fabric envelope is now discussed in more detail. and further preferred features explained.

Any suitable recoverable fabric may be used, including any described in the references referred to above, particularly those which are not laminated with. or do not include a matrix of polymeric material. Preferably the fabric has heat recoverable fibres extending across the width of the tape and heat stable fibres extending along the length of the tape. This means that when the fibres recover the tape decreases in width and increases in thickness. Preferably the fabric used has a relatively open design. Particularly preferred fabric designs are plain weave, especially with bundles of heat recoverable fibres. WIWK (weft insertion warp knitting) and satin 3 and satin 4.

In a preferred embodiment the heat recoverable fabric envelope contains an electrically powerable heater to which electrical power may be applied. The heater is preferably a strip heater that substantially follows the path of the envelope or other tape. ie may be described as extending in substantially the same "plane" (which may of course be curved) as the surfaces of the envelope. The strip heater is preferably a self limiting heater, that is one which maintains a pre-determined temeprature and switches itself on and off to maintain that temperature. Preferably the heater comprises a conductive polymeric material, especially one which exhibits PTC (positive temperature coefficient of resistivity) behaviour. An especially preferred heater design, described in European Patent Application Publication No. 0237228. This heater uses a material comprising a PCT or NTC composition, at least two electrodes to which a source of electrical power may be applied to cause current to flow through the material. and means other than reversal of polarity of the source of power whereby the direction of current flow in a region of the material can be made to alter through at least 90°. Zones of heaters initially in series can thus become arranged in parallel, preferably automatically around a PTC switching temperature. Such a system can avoid excessive current in-rush when cold. A PTC heater strip may also be made having zones whose mode of interconnection can be altered by an external switch for example in a power supply, for example after a fixed time. Thus, a greater resistance load may be presented to a power supply when a PTC heater is cold, again reducing current inrush.

Preferably the strip heater extends only part way across the width of the tape, preferably centrally thereof. This means that when it is heated the fibres adjacent the heater heat first, shrink, and hence bring further lengths of fibre adjacent the heater, which in turn shrink, and so on. This progressive shrinkage aids uniform thickening of the tape on recovery.

Preferably the fabric envelope contains heat activatable adhesive, especially a hot melt adhesive. Preferably this is activated on recovery of the fabric. Thus on recovery the adhesive melts and is forced to move by the recovering fabric. It may flow to fill the interior of the envelope, and may also be forced through interstices of the fabric to an exterior surface of the envelope. In this respect the design of the fabric. in particular the openess of the fabric is important in determining how much adhesive is retained in the fabric and how much forced through the fabric. Thus the adhesive may both fill the envelope and be forced to the exterior surface thereof to form a bond to a surrounding surface.

The adhesive can conveniently be provided as strips. When the envelope contains a strip heater.

strips are preferably provided on either side of the heater, preferably extending the full width of the envelope. Where the heater extends only part way across the width of the envelope. additional adhesive strips are preferable also provided between the existing two adhesive strips adjacent each long side of the heater strip. Examples of suitable adhesive that can be used include ethylene copolymers such as EVA and EAA. dimer acid based polyamides, and formulations based thereon.

According to the invention. on recovery the tape may increase in thickness. Where the fabric contains an adhesive, the envelope may increase in thickness in part due to adhesive being forced through the fabric (as well as due to the tape itself increasing in thickness). This will, in general. be because the volume within the envelope decreases a recovery, driving adhesive out. Thus the adhesive on an exterior surface of the envelope may contribute to the total thickness of the tape after recovery.

For some applications it is desirable to include an additional filling layer on the tape. preferably co extensive with the edges thereof. Preferably this is flexible and relatively cheap to manufacture. It is desirable for applications where a large space is to be filled. Where the tape is to fill an annular space the filling layer is preferably omitted from or removed from the part which forms the outermost layer of the wrapped tape.

A second category of preferred embodiment is one in which the envelope comprises a heat-stable (i.e. non recoverable) polymeric material. Examples of materials that can be used for the heat stable polymeric material include polyethylene, thermoplastic polyurethanes or laminated films. In this case the heat-recoverale member(s) preferably join opposed longitudinal edges of the envelope. Thus recovery of the recoverable member(s) causes the long edges of the envelope to be pulled towards each other. Hence the width of the tape decreases and the thickness increases. The envelope is heat-stable the internal volume of the envelope may remain unchanged.

The heat-stable envelope preferably contains an electrically powerable heater. preferably in contact with the recoverable member(s). Any of the heaters referred to in respect of the fabric embodiments can be used.

The heat recoverable member(s) in the heat stable envelope may comprise any material. for example heat recoverable polymeric material. or heat recoverable fabric. A continous single strip member may be used extending along the length of the tape and recovering at an angle thereto. or a plurality of discrete members each extending across width of the tape may be used.

An outer surface of the envelope is preferably coated with adhesive. Preferably the adhesive is heat activatable and is activated on recovery of the heat recoverable members. The adhesive seals the envelope to the adjacent substrate (s). An adhesive may also or alternatively be provided on an inner surface, and if desired different adhesives may be used on the outer and inner surfaces of the wrapped envelope, depending on the surfaces to be sealed to. For example, for a duct seal, the adhesive on the outer surface preferably comprises a material which bonds well to the duct, and the adhesive on the inner surface preferably comprises a material which bonds well to the material of the tape itself.

For applications where the tape is to be used to seal a space which may be subjected to pressure the envelope may be provided with a V-type seal. Respective limbs of the V are bonded to the envelope and the surrounding substrate respectively and the V-seal can open up in response to a change in pressure on either side of the seal, so that the bonds between the seal and the substrate and envelope are not put in peel. A suitable V-type seal is described in U.K. Patent No. 2040106 (B041) and European Patent Application Publication No. 0148785 (B098), the disclosures of which are incorporated herein by reference.

The interior of the envelope may have filled with any suitable material, for example air, liquid, curable or foamable liquids.

Tapes according to the invention, including the first and second category of preferred embodiment may be applied in a variety of ways depending on the specific application. For many applications the space to be sealed is annular. In these cases it is preferred that the tape is wrapped at least once around te object, preferably with a minimum overlap of at least 10%. Preferably the tape is wrapped two or more times around the substrate. Where the tape is used in conjunction with an additional filler layer the filler layer is preferably removed from the end of the tape which forms the outer layer of the wrapped tape (including 10% overlap length). Especially where adhesive is included this ensures a good seal. The tape can also be used to fill non-annular spaces, for example a space between two plates or curved surfaces.

The multiwrap facility of the tape of the present invention means that the tape can be used to seal large and small spaces. The tape shape may effect ease of wrapping, and where the width: thickness ratio is at least 10:1 wrapping will generally be easy, and the wrapped layers will generally stay in place with substantially no tendency to fall off each other.

Embodiments of the invention will now be described by way of example with reference to the accompanying drawings, wherein:

Figure 1 is a perspective end view of a tape according to the invention:

Figure 2 is a perspective view of the modification of the tape of Figure 1.

Figure 3 is a perspective view of a tape of Figure 2, wrapped around an object to be sealed in a duct:

Figure 4 and 5 are ends views of the tape of Figure 2 installed in the duct before and after recovery respectively;

Figure 6 and 7 are perspective end views of a second embodiment of tape according to the present invention before and after recovery.

Figure 8 and 9 are schematic side sectional views of the tape of Figure 5 and 6 wrapped around a cable to be sealed before and after recovery.

Figure 10 and 11 show further tape designs.

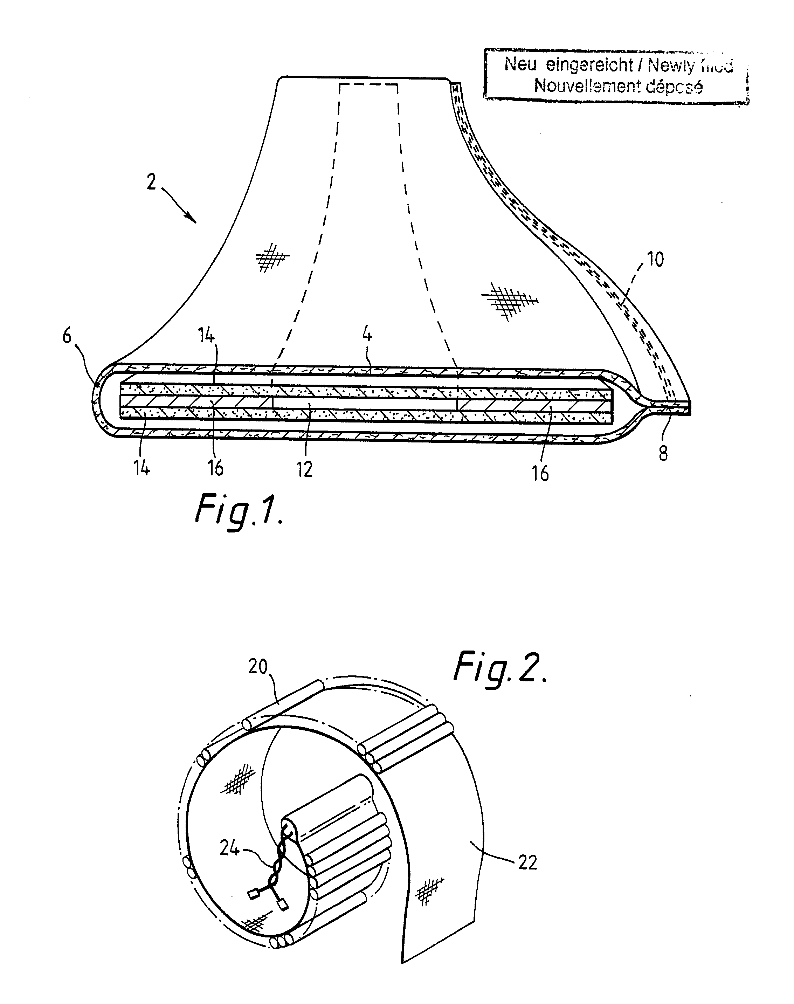

Referring to the drawings, Figure 1 shows a tape 2 comprising a recoverable plain weave fabric sheet 4 folded along its longitudinal axis and secured along its longitudinal edge 8 by three rows of stitching 10. Thus the fabric sheet 4 provides a closed envelope. The fabric is a plain weave comprising bundles of heat recoverable monofilament polyethylene fibres extending across the width of the tape. An elongate heater strip 12 extends along and within the length of the envelope. The width of the heater strip 12 is about one third the width of the tape and is positioned substan tially centrally of the width of the tape. The heater 12 comprises a self limiting conductive polymeric heater exhibiting PTC behaviour. Adjacent both flat sides of the strip heater 12 adhesive strips 14 are provided. These extend the full length of the envelope. Further adhesive strips 16 are also provided between strips 14, on either side of heater strip 12. These adhesive strips comprise a hot melt adhesive.

The heater strip 12 can be connected to a 24V power supply and powered to recover the fabric. On recovery the lengths of fibre in the fabric adjacent the heater, (i.e. directly above and below the heater as shown in the drawings shrink. Thus further lengths of fibre are brought directly adjacent the heater, shrink and so on. Also the hot melt adhesive 14,16 melts. Thus the tape decreases in width and increases in thickness. Also adhesive is forced through the surface of the fabric to the outer surface.

Figure 2 shows a modification of the tape of Figure 1. The modification is the addition of a filling layer 20 laminated to the surface of the tape. The layer 20 comprises corrugated polyethylene, the corrugations being provided to maintain flexibility of the strip. The filler layer is provided such that a large space can be filled cheaply. Without the filling layer a multitude of wraps would have to be made of the tape of Figure 1 to fill a large space.

The tape is adapted to be wrapped about a cable fitted into a duct, i.e. to fill an annular space. Filling layer 20 is removed along a length 22 at one end of the tape. Length 22 is arranged to be about 1.2 times the length of the periphery of the installed tape, so that a complete wrap of tape minus filling layer provides the outer layer of the wrapped tape. The connector wires 24 connecting the electrical heater (not shown) to a power supply are also shown in Figure 2.

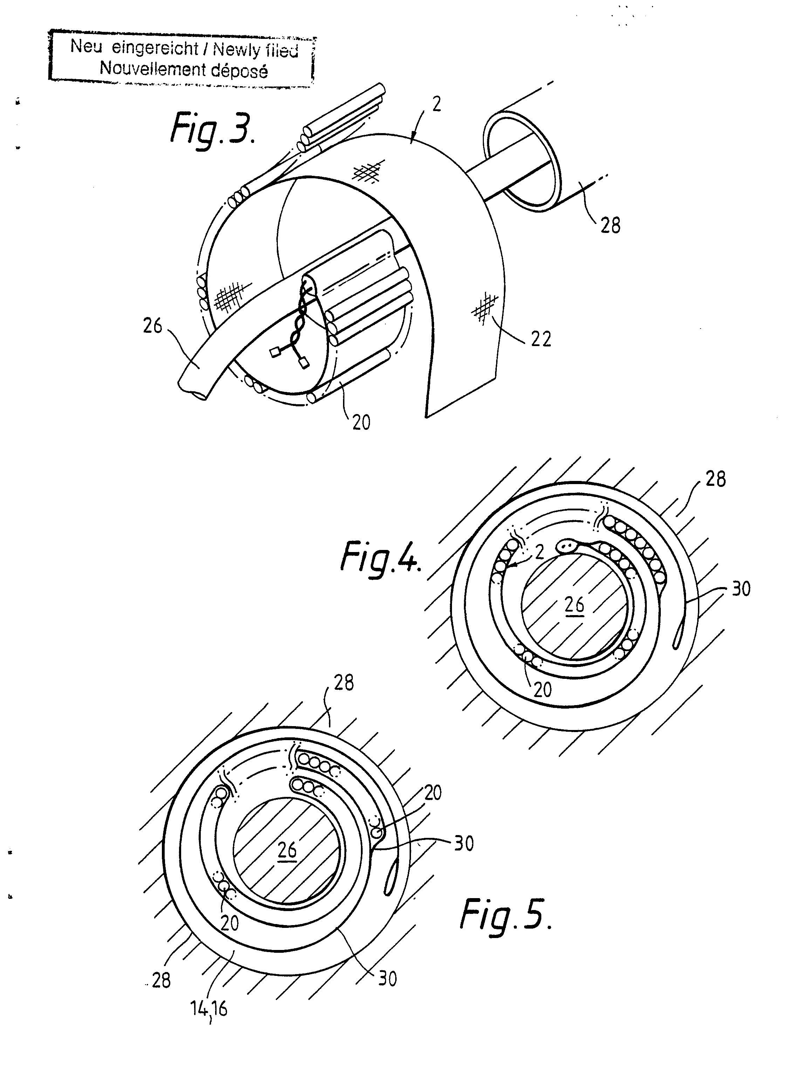

Figure 3 and 4 show the tape of Figure 2 wrapped around a cable 26 to be sealed in a duct 28. The tape is wrapped many times about the cables 26 (see dotted lines). The filling layer 20 takes up much of the space between the cable 26 and duct 28. The outer wrap 30 however is free of filling layer. On recovery the tape decreases in width and increases in thickness. The adhesive 14,16 flows, fills the envelope of the tape and is forced, by the recovery, through the fabric to the exterior surface thereof.

Along most of the length of the tape, the adhesive that has flowed to the exterior of the tape seals each turn to the adjacent turn of the wrapped tape. For the outermost tape wrap, the flowed adhesive seals the tape mass to the interior wall of duct 28. Figure 5 shows the recovered tape.

Where a smaller space is to be filled, the filling layer is advantgeously omitted.

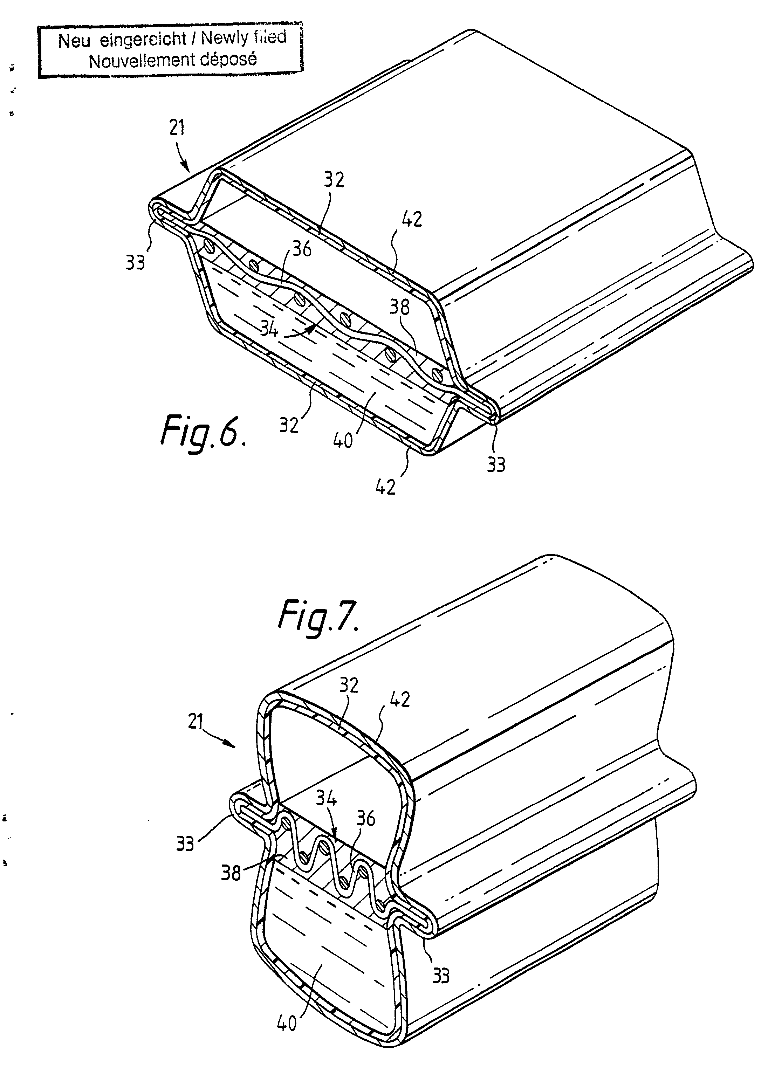

Figure 6 shows an alternative embodiment, which is preferably used in conjunction with a V-seal as described above. The tape 21 comprises an envelope 32 of dimensionally heat stable polyethylene, a thermoplastic polyurethane or a laminated film. The envelope is initially oblate in cross-section, and opposite longitudinal edges 33 of the envelope may be joined by an elongate recoverable material, for example fibres or fabric 34. The fabric 34 may comprise heat shrinkable fibres 36 extending across the width of the tape, and PTC coated conductive wires extending along the length of the tape. The whole may be embedded in a layer of ZTC material 38. The envelope may be filled with air, a meltable material or any suitable liquid 40. On heating, fibres 36 shrink and the edges 33 are pulled towards each other (Figure 7). The overall volume of the envelope may remain unchanged but become thicker and less wide. The outer surface of the envelope may be coated with hot melt adhesive 42. In general, for the internal volume to remain contsant and the shape to change it will be necessary for the walls of the envelope to stretch and/or wrinkle. An alternative to this is for the periphery of the envelope to remain constant, and the internal volume to change, for example by its contents foaming etc.

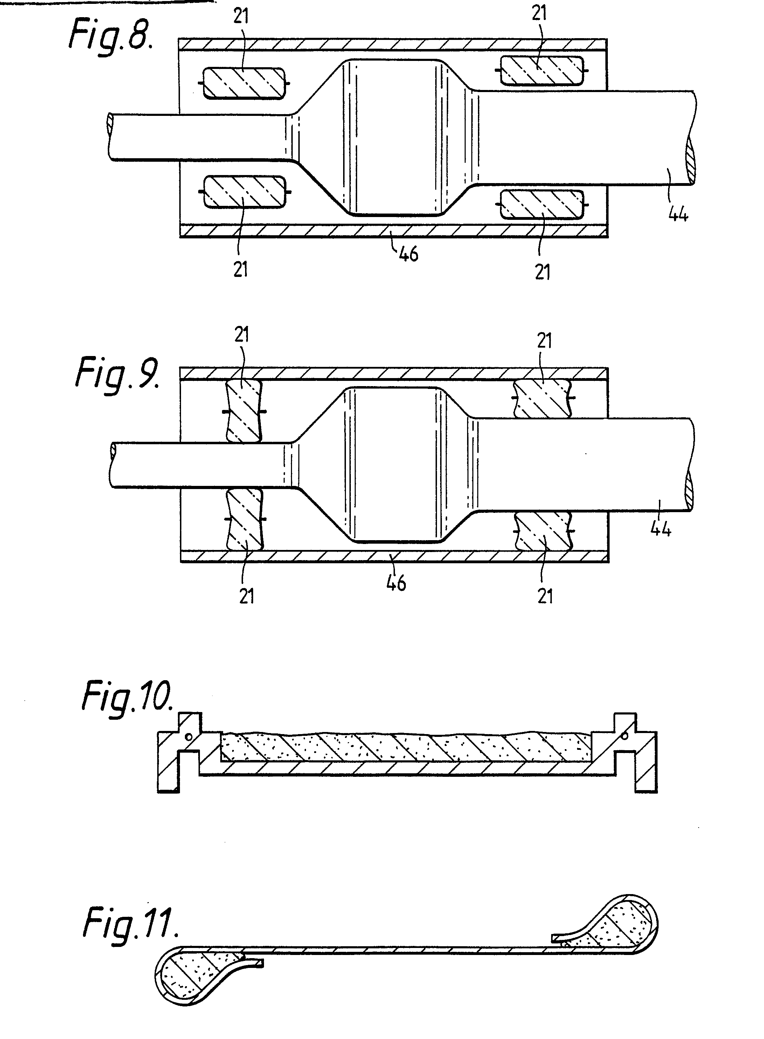

Figure 8 and 9 show the tape 21 of Figures 6 and 7 sealing a space between a cable 44 and sleeve 46.

The tape 21 is wrapped once around the cable and when heated recovers to the position shown in Figure 9. The adhesive on the exterior surface of the tape 21 flows to complete the seal.

Figure 10 shows a cross-section of a profiled tape. Edges of the tape have means for interlocking with edges of previous and/or subsequent wraps. An adhesive (shown dotted) may be trapped between the wraps. On transverse heat-shrinkage, the adhesive is displaced causing a multi-wrap of the tape to swell. The adhesive may be trapped as shown by the profiled edges that interlock, or separate adhesive dams may be provided. A similar effect may be achieved by looped-over edges of the tape as shown in figure 11.

Typical specifications for the tape 2 shown in Figures 1-5 are as follows:

Fabric 4

Design plain weave with bundles of monofilaments
Recoverable PE monofilaments
4 bundles of each 4 monofilaments per cm
Each monofilament is stretched LLDPE
(Diameter = 0.25 - 0.3 mm or 64 Tex)
Heater stable glass fibres:
3 $^{\times}$ 68 Tex, 3.cm
Width of wrapped tape:
80 - 300mm, preferably 150 - 220 mm, in case of a duct seal application for ducts with inner diameter 90 - 110 mm.
Thickness of wrapped tape:
2 - 5 mm (not including filling layer 20)
Typical length of tape:
120 - 900 mm, preferably 400 - 750 mm for duct seal applications

Heater 12Width 50 ±10 mm
thickness 0.5 - 3 mm
power supply less than or equal to 24V, AC or DC

Adhesive Strips 14Width 70 - 280 mm, preferably 140 - 210 mm, for duct seal
thickness 0.3 mm

Adhesive Strips 16Width 30 - 90 mm
thickness 0.5 - 1.2 mm

Polymeric filling layer 20 Width 100 - 220 mm thickness 1 - 10 mm

Typical specifications for the tape 21 shown in Figures 6 - 9 are as follows:

Specific for tape 21

Substantially same as above, plus:
film 32 flexible packaging film having a thickness of 0.050 to 0.500 mm
Adhesive 42 0.1 to 0.5 mm thick and can (should) be different on top and bottom.

## Claims

1. A heat-recoverable sealing tape being capable of being wrapped around a substrate, and having means for locating sealing material, the tape being so configured as to cause displacement of sealing material on heat-recovery of the tape.

2. A sealing tape according to claim 1 comprising one or more heat-recoverable members extending substantially in a plane of the tape in a direction at an angle to the length of the tape,
wherein the sealing tape can be wrapped at least partly around at least one elongate object such that recovery of the heat-recoverable member(s) causes the tape to decrease in width and increase in thickness to form a seal between the or each object and a surface surrounding the or each object.

3. A sealing tape according to claim 1, additionally comprising an electrically-powerable heater which can be powered to heat and recover the tape.

4. A sealing tape according to claim 1 or 2, having the form of an envelope of material.

5. A sealing tape according to claim 2, having the form of an envelope, of material, the envelope containing the said electrically-powerable heater.

6. A sealing tape according to claim 2, where the electrically-powerable heater comprises a strip heater.

7. A sealing tape according to claim 6, wherein the strip heater substantialy follows the path of the tape, the heater extending only part way across the width of the tape.

8. A sealing tape according to claim 2, wherein the heater is a self-limiting heater comprising a conductive polymeric material.

9. A sealing tape according to claim 4, where the envelope contains a heat-activatable adhesive, which can be activated on recovery of the tape and thereby partly squeezed through the envelope to an exterior surface thereof.

10. A sealing tape according to claim 3, wherein the envelope comprises a heat-stable material, and wherein opposite edges of the envelope are secured to the heat-recoverable member(s).

11. A sealing tape according to claim 10, wherein the heat-stable material comprises a heat stable polymeric material.

12. A sealing tape according to claim 10, wherein the heat recoverable member(s) comprises a strip of heat-recoverable polymeric material or a strip of heat-recoverable fabric.

13. A sealing tape according to claim 10, wherein the envelope is coated on an exterior surface thereof with a layer of heat-activatable adhesive.

14. A method of forming a seal between at least one elongate object and a surface surrounding the or each object comprising:
(1) wrapping at least partly around the object(s) a sealing tape having one or more heat-recoverable members extending substantially in a plane of the tape in a direction at an angle to the length of the tape; and
(2) recovering the heat-recoverable member(s) thereby causing the tape to decrease in width and increase in thickness to form the seal between the said elongate object(s) and the said surface.

15. A method according to claim 14, wherein the sealing tape additionally comprises an electrically-powerable heater and the method additionally comprises applying electrical power to the heater.

16. A method according to claim 14, comprising wrapping the sealing tape around the object(s) two or more times.

**Fig.1.**

**Fig.2.**

Fig.3.

26

2

28

22

20

Fig.4.

28

2

26

30

20

28

28

20

26

30

20

14,16

28

30

Fig.5.

*Fig.6.*

*Fig.7.*

*Fig.8.*

21  21

44

46

21  21

*Fig.9.*

21  21

44

46

21  21

*Fig.10.*

*Fig.11.*